# EUROPEAN PATENT APPLICATION

(11) **EP 2 123 179 A1**
(43) Date of publication of application: **25.11.2009**
(21) Application number: 09153955.1
(22) Date of filing: 27.02.2009
(51) Int. Cl.: A24B 3/06, B65D 83/00

(54) **Device particularly for loosening and dosing tobacco stored in containers**

(30) Priority: 23.05.2008 IT VE20080044
(71) Applicant: GARBUIO S.p.A., 31038 Paese (Prov. of Treviso) (IT)
(72) Inventor: Favaro, Mansueto, 31100, Treviso (IT)
(74) Representative: Modiano, Micaela Nadia

(57) **Abstract**

A device (1) particularly for loosening and dosing tobacco (2) stored in containers (3), comprising a tilting support (10) for the container (3) with which an actuator (12) is associated which is adapted to push the movable bottom (8) of the container (3) to achieve the controlled expulsion of the tobacco (2) at means (19) for loosening and dosing.

## Description

The present invention relates to a device particularly for loosening and dosing tobacco stored in containers.

Currently it is known to accumulate tobacco, in its various forms (for example in leaves, strips, shag, cut filler, ribs and laminas in expanded form, et cetera) in appropriately provided containers, both to temporarily store it within the production facility and to allow its transportation.

These known types of container are typically made of rigid material, generally plastics, metal, wood or cardboard, are shaped like a parallelepiped and have variable dimensions according to the specific requirements; the upper surface of these containers is open or can be opened in order to allow to fill them.

These containers generally but not necessarily contain approximately 100-300 kilograms of tobacco, which can also be lightly compacted.

In order to introduce tobacco in these containers, known types of device are in fact used which are known as "filling stations" and generally comprise a device for inserting and removing the container (which comprises appropriately provided rollers or chain conveyors or other known movement means) and a loader that can be lifted and is constituted by a hollow box-like body, which is open at its upper and lower ends and is arranged above the container to be filled, at its upper face, which is open, and is filled from above.

The lower rim of the loader is rested against the upper rim of the container to be filled or is inserted therein and therefore acts as a collector for conveying the tobacco into the container.

These known types of filling station further comprise a pressing head, which has a vertical stroke, is generally actuated pneumatically or electromechanically, and is adapted to compress the product introduced in the loader and push it into the container.

These known types of filling station are used generally to provide compression ratios of approximately 1/2 between the density of the tobacco introduced in the loader and the density thereof after compression: the height of the loader is established as a function of the compression ratio to be obtained.

The use of these containers is based on the need to ensure maximum production flexibility, since their use allows to rapidly make available discrete and limited quantities of product.

Commonly, such containers are provided with electronic identification systems, such as for example bar code systems or RFI (Radio Frequency Identification) systems.

In both cases, in addition to the identification of the container, the data related to its content, such as for example the type of product, the net weight, the filling date, et cetera, are stored.

These containers are then tipped and emptied into feeders to allow to loosen the corresponding block of product and allow dosage at the subsequent feeding point.

Such feeders can be of two types, generally referenced as "silos" or "mini-silos" or "feeders"; they are based on a common operating principle, although they differ from a constructive standpoint.

In both cases, the block of product is deposited onto a conveyor belt that has high lateral containment walls (approach belt).

In the case of "silos" or "mini-silos", the block of product is moved by such conveyor belt towards rotary reels, which loosen and dose the product.

In the case of "feeders", the same functions of the rotary reels are performed by a belt, which is inclined with respect to the approach belt (typically 50-60° with respect to the horizontal plane) and is provided with pins that are arranged at right angles to the plane of advancement of such inclined belt.

Therefore, in both cases, the feeding of the product to the loosening and dosage point is achieved by means of conveyor belts.

The best uniformity of dosage, i.e., of the flow of product to the outlet of the feeder system, is required for regular functionality of the devices arranged downstream along the processing line.

Although these applications are widely used by the industry, they have some drawbacks/limitations, which are listed hereafter.

Commonly, the blocks of product tend, upon emptying, to break up and lose the original parallelepipedal shape imposed by the initial container, thus tending to become shapeless piles of randomly variable height.

Therefore, during product dosage, a "front" of product of variable height is presented to the reels or to the belt with pins and understandably gives rise to variations in delivered flow (for an equal approach speed).

The pile of product of course has, at its ends, slopes with an angle of inclination that is equally variable at random ("head" and "tail").

The dosage of the product starting from the head and from the tail is even more problematic, since the front that is presented to the spools or to the inclined belt with pins is fully uncontrollable.

In order to control the final flow of product that is sent to the downstream process and neutralize the variations delivered by the feeding system described above, mass- or volume-based auxiliary dosage systems are typically arranged downstream; despite being perfectly efficient, such systems entail a very significant cost increase (for example, weighing belts with gravity tube).

Upon emptying inside the feeding system, the block of product, by gravity, tends to produce a considerable air displacement, which entails an emission of dust.

Moreover, the fall can give rise to fragmentation and therefore degradation of the product.

So-called "pouring" systems are therefore known which are conceived to retain the block of product within the container until it has been tipped completely and until it is moved closer to the approach belt.

After the removal of the block retention systems, the product is made to exit by extracting the container upward, the product continuing to be supported by such approach belt.

Such devices are reasonably effective in limiting the emission of dust and the degradation of the product, but they entail the addition of relatively complex mechanical elements and therefore a considerable increase in the cost of the entire system.

However, there is an additional drawback: during normal production activity, frequently not all the amount of product in the container is used for the current process, and therefore a residual fraction has to be returned to store for subsequent reuse.

Since the container is always in any case emptied completely into the feeding system, if this situation reoccurs, it becomes necessary to recover the product at the output of such system by reintroducing it in a container.

In addition to the obvious increased logistical burden, this entails the useless and damaging handling of the product and the preparation of suitable devices, which make the entire system even more onerous in terms of initial investment.

By summarizing the problems, considering the feeding systems described above in terms of their functional sequence, it is observed that starting from a known quantity of product that is regularly shaped within a container, the subsequent emptying of such container causes loss of control of the block and of the residual quantity.

This entails lack of uniformity in generating the delivered flow, and therefore from the functional standpoint the described known system is illogical, since it first causes the loss of such fundamental control data and then comprises additional devices that are adapted to "fix the damage" that has been introduced.

This of course has a drastic impact on the cost of the system, due to its excessive and "useless" complexity.

The fact is also known that upon emptying of the container a fraction of product might not be released, being retained by adhesion to the side walls and/or the bottom: this occurrence entails the need to check and optionally clean each emptied container, since the potential contamination of the product of the subsequent filling, indeed due to the residue that has not been removed accurately, leads to a severe qualitative damage to the final product.

The aim of the present invention is to solve the above-mentioned problems, eliminating the drawbacks of the cited background art, by providing a device that allows to achieve optimum loosening and dosage of tobacco starting from the container.

Within this aim, an object of the present invention is to maintain the parallelepipedal shape of the product, with consequent uniformity of the front for approaching the loosening and dosage means.

Another object of the present invention is to provide a device that allows to proceed with the adjustment of the mass flow that is fed by controlling the approach speed of the block, so as to suppress the auxiliary downstream flow adjustment systems and simplify the management of the "head" and "tail".

Another object of the present invention is to obtain a device that allows to eliminate the degradation of the product and the emission of dust.

Another object of the present invention is to obtain a device that does not require retention of the residual product after emptying the container.

Another object of the present invention is to provide a device that allows to achieve the above aim and objects even in case of partial use of the product contained in the container, without requiring a new filling of such container.

This aim and these and other objects, which will become better apparent hereinafter, are achieved by a device particularly for loosening and dosing tobacco stored in containers, **characterized in that** it comprises a tilting support for said container with which an actuator is associated which is adapted to push the movable bottom of said container for the controlled expulsion of said tobacco at means for loosening and dosing the tobacco.

Further characteristics and advantages of the invention will become better apparent from the following detailed description of a preferred but not exclusive embodiment thereof, illustrated by way of non-limiting example in the accompanying drawings, wherein:

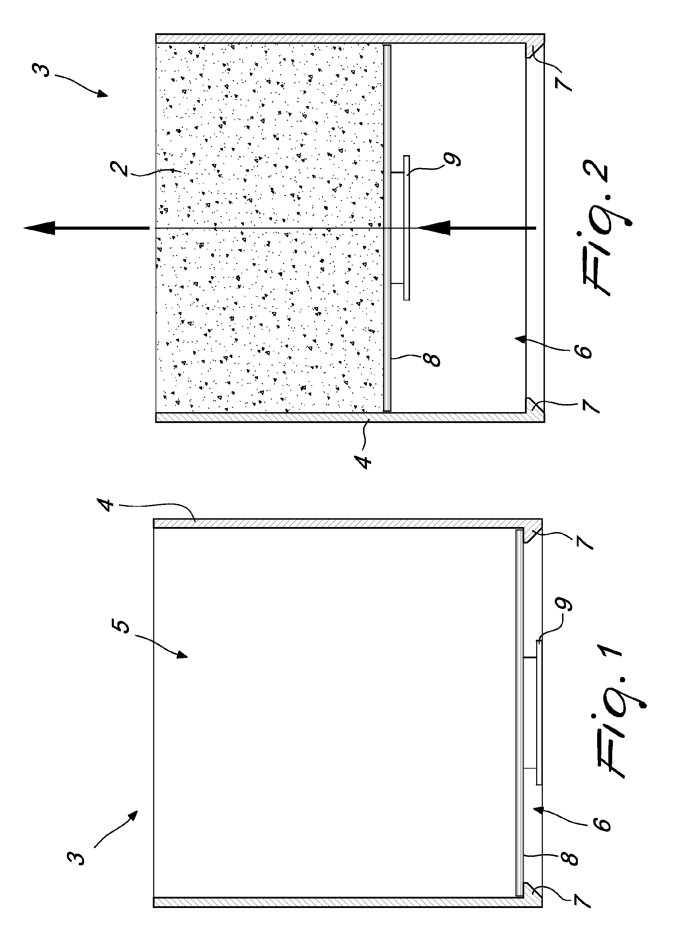

Figure 1 is a partially sectional side view of the container;
Figure 2 is a view, similar to the preceding one, of the container with the product stored therein, with the bottom partially raised;
Figure 3 is a side view of a tilting support for the container, with which an actuator is associated which is adapted to push the movable bottom thereof and means for loosening and dosing the tobacco;
Figures 4 to 7 are views of the device according to the invention in the operating configuration.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 generally designates a device particularly for loosening and dosing tobacco 2 stored in containers 3.

The container 3 has a box-like structure that defines side walls 4 and an upper opening 5 (or upper feeding port) and a lower opening 6.

At the ends of the side walls 4 there are, adjacent to the lower opening 6, protrusions 7 that are directed toward the inside of the container 3.

A bottom 8 is associated slidingly inside such container and can thus move and has, in a lower region, and appropriately contoured appendage 9.

The container can be associated with a tilting support or with a tilting device 10, which is provided with a grip bracket 11 with which an actuator 12 is associated which is adapted to push the movable bottom 8 of such container for the controlled expulsion of such tobacco.

The actuator 12 can be of the linear type, be it electrical or pneumatic or hydraulic, and adapted to engage the grip bracket 11, so as to produce the sliding of the bottom 8 within the container 3.

The sliding speed of the bottom 8 can be controlled accurately by means of known systems for adjusting the speed of the actuator 12; therefore, since the extraction of the block of product from the container occurs at an appropriately controlled speed, an equally controlled mass outflow of the product is achieved.

Such actuator is constituted preferably by a first piston, from the body 13 of which a pin 14 protrudes which is guided and can slide within an arc-like slot 15 provided at the hypotenuse of a first plate 16 that is preferably triangular and is jointly connected, at one of its catheti, to the grip bracket 11.

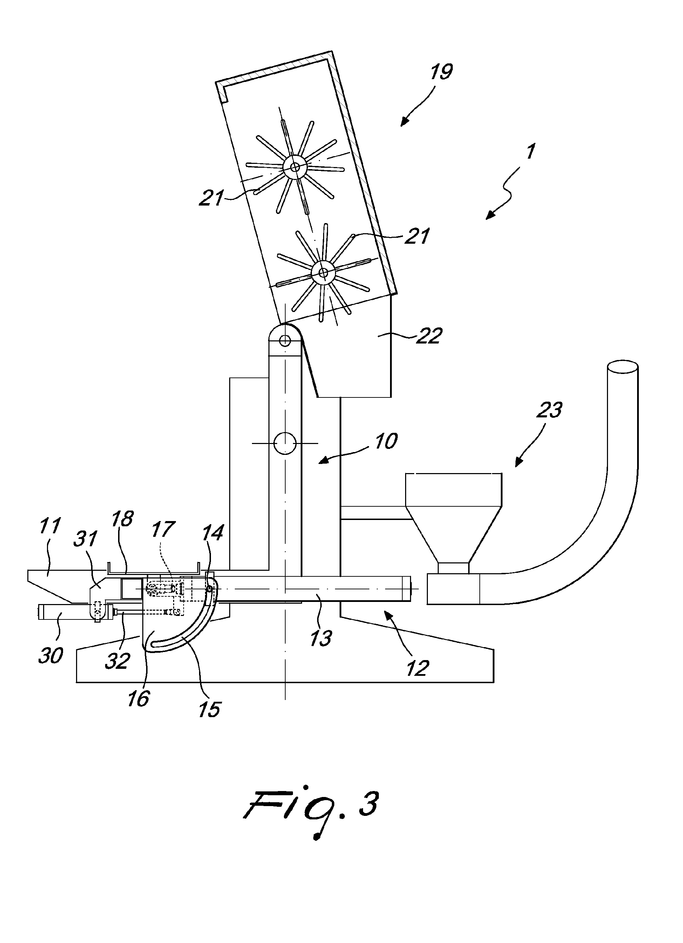

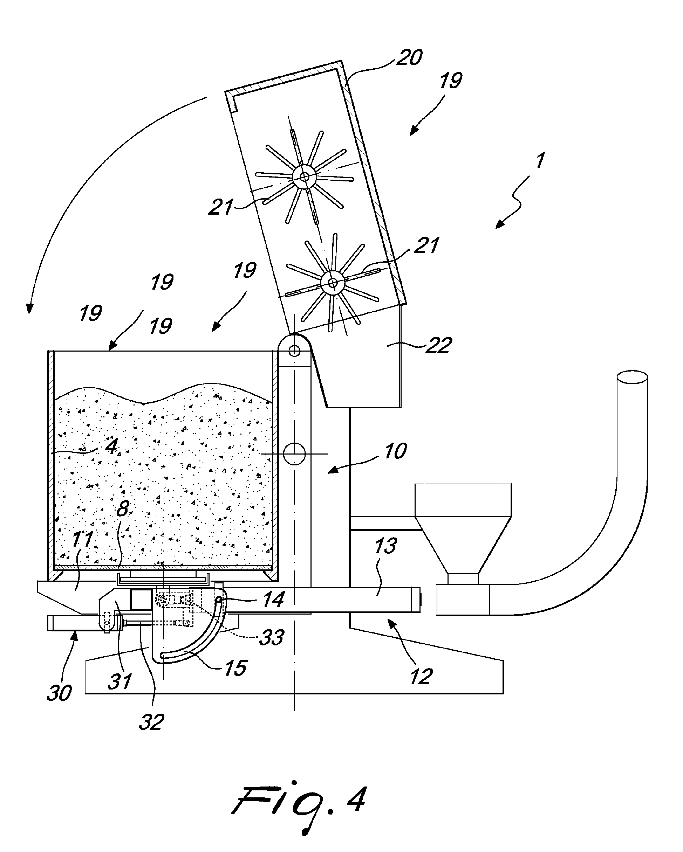

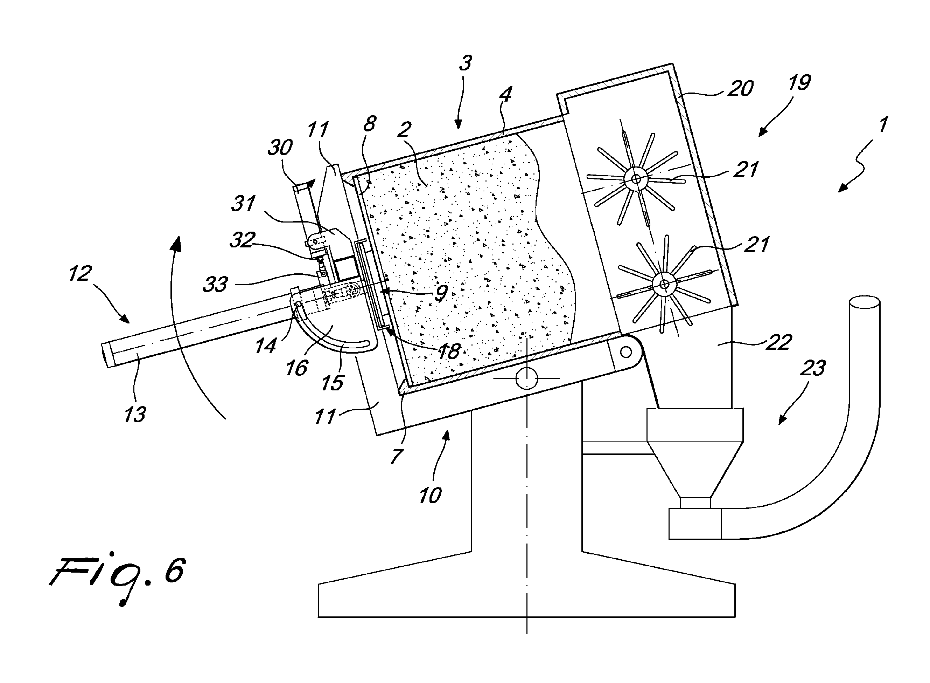

The slot 15 is arranged so that the actuator 12 is allowed to perform a rotation that moves it from an initial position, in which it is arranged adjacent to the bracket 11 (shown in Figures 3, 4 and 5), to a position in which it is rotated through 90° (shown in Figure 6).

The rotation of the actuator 12 is allowed by a second piston 30, whose body is jointly connected and is arranged approximately parallel to the grip bracket 11 by way of an appropriately provided arm 31.

A shank 32 of the second piston 30 is associated with a plate 33 that protrudes radially with respect to the body 13 of such first piston that constitutes the actuator 12.

Such actuator further has an additional shank 17, which is articulated, at its end, to a centering and engagement element 18 for the appendage 9, such as for example a complementarily shaped second plate that is conveniently magnetized in order to allow its entrainment during the lowering of the bottom.

Means 19 for loosening and dosing the tobacco are rotatably associated with the tilting device 10 on the opposite side with respect to the grip bracket 11 and so as to face the upper opening 5 of the container 3; such means are constituted for example by a box-like structure 20, which contains a set of rotating reels 21 and has, on one side, a hopper 22 for discharging the product onto an underlying conveyor 23.

The set of rotating reels 21 is therefore pivoted to the tilting device 10 about an axis that is arranged, when such tilting assembly is in the inactive position, above the axis of rotation thereof.

Use of the device according to the invention is as follows.

The container 3 is arranged on the tilting support or tilting device 10 that is provided with the actuator 12; the means 19 for loosening and dosing the tobacco containing the set of rotating reels 21 is turned until it faces the upper opening 5 of the container 3.

The set of reels 21, in order to face the upper opening 5 of the container 3, can be actuated so as to rotate by appropriate and known means.

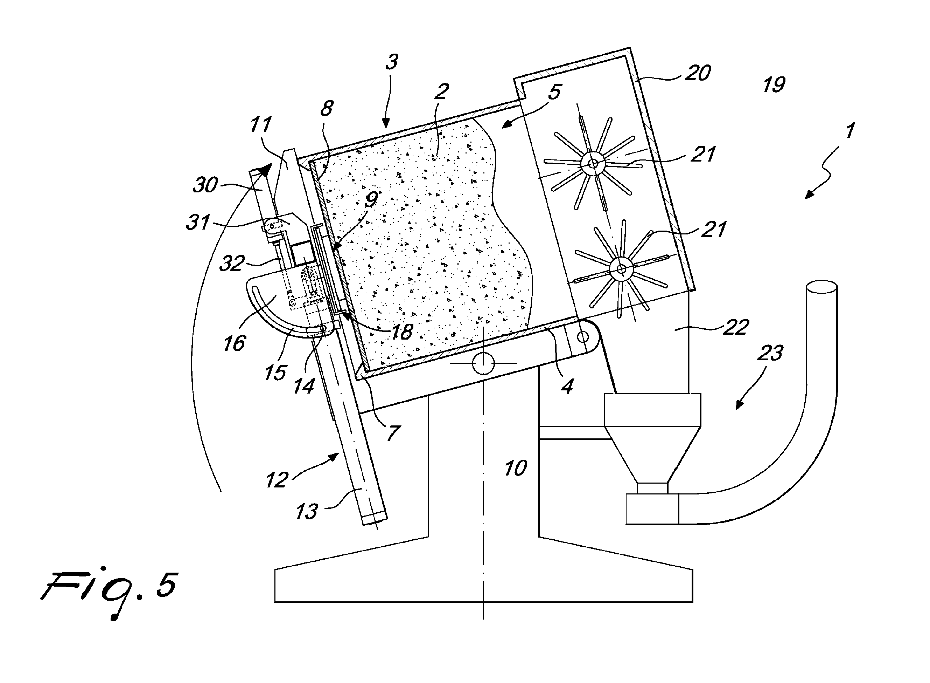

The assembly constituted by the container 3 and by the set of rotating reels 21 is then turned to the active position, which corresponds to what is shown Figure 5, in which optimum positioning for subsequent loosening on the part of the set of reels 21 occurs.

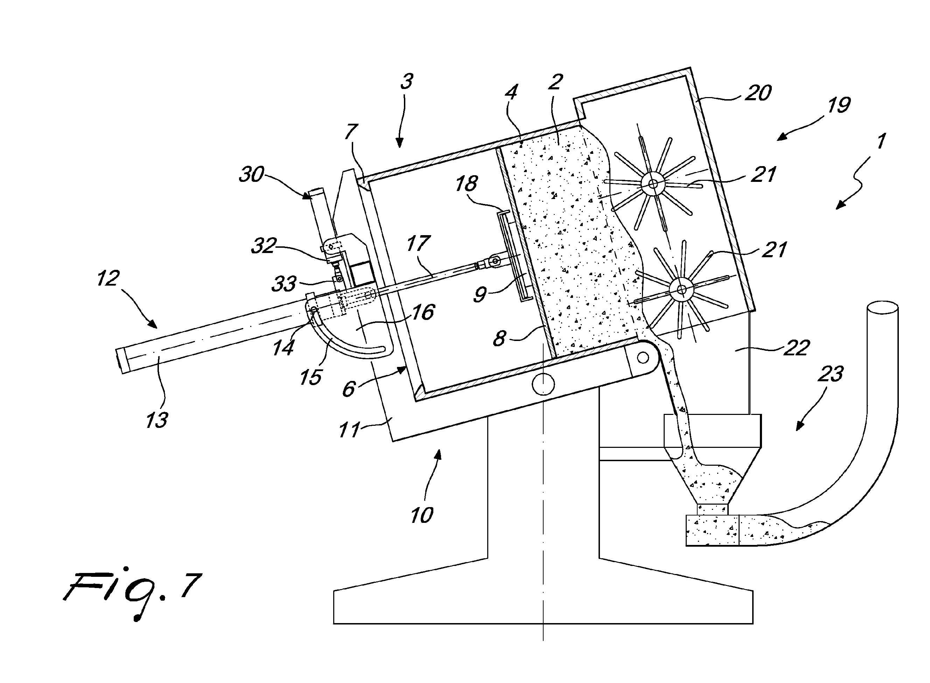

The actuator 12 is then turned until it is positioned so as to be able to push the bottom 8 of the container 3 (as shown in Figure 6) so as to make the product interact with the set of reels 21 (as shown in Figure 7).

The rotary actuation of the reels 21 and the extent of the activation of the actuator 12 are controlled as a function of the required flow of product.

Once the container 3 has been emptied completely, or once the feeding session has ended, the bottom 8 is retracted to the initial position and any residual portion of product is made to fall into the container 3.

It has thus been shown that the invention has achieved the proposed aim and objects, a device having been devised which allows to achieve the optimum loosening and dosage of tobacco starting from the container, while maintaining, by way of the movability of the bottom, the parallelepipedal shape of the product with consequent uniformity of the front of approach to the loosening and dosage means.

The invention further allows to adjust the mass flow that is fed by means of the control of the approach speed of the block, thus being able to suppress the auxiliary downstream flow adjustment systems, simplifying the management of the "head" and "tail" and eliminating both product degradation and dust emission.

Finally, the possibility to move the bottom of the container allows to avoid requiring retention of the residual product after emptying the container, and, in case of partial use of the product contained in the container, the subsequent emptying without requiring a preliminary filling of such container.

The device as a whole is simplified drastically by suppressing the feeding system (mini-silo, feeder), at the end of the feeding session, the residual product remaining within the container without requiring reintroduction.

Outflow is controlled perfectly by means of the adjustment of the rate of extraction of the bottom, by way of the retention of the parallelepipedal shape that is presented to the set of reels.

If the entire content is used, there is assurance of complete emptying the container by way of the complete extraction of the movable bottom, thus avoiding potential contamination of the subsequent fed product.

The invention thus conceived is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like can also be omitted or be replaced with equivalents.

The disclosures in Italian Patent Application No. VE2008A000044 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device particularly for loosening and dosing tobacco stored in containers, **characterized in that** it comprises a tilting support for said container with which an actuator is associated which is adapted to push the movable bottom of said container for the controlled expulsion of said tobacco at means for loosening and dosing the tobacco.

2. A device particularly for loosening and dosing tobacco stored in containers, **characterized in that** it comprises an actuator that is adapted to push the movable bottom of said container for the controlled expulsion of said tobacco.

3. The device according to one or more of the preceding claims, **characterized in that** said container has a box-like shape so as to form side walls, an upper feeding port or opening and a lower opening, at the ends of said side walls there being, adjacent to said lower opening, protrusions that are directed toward the inside of said container, a movable bottom being slidingly associated within said container and being provided in a lower region with at least one appropriately contoured tab.

4. The device according to the preceding claim, **characterized in that** said container can be associated with a tilting support or with a tilting device that is provided with a grip bracket, with which at least one actuator is associated which is adapted to push said movable bottom of said container for the controlled expulsion of said tobacco.

5. The device according to claims 1 or 2 and 4, **characterized in that** said actuator is preferably constituted by a first piston, from the body of which a pin protrudes which is guided and can slide within an arc-like slot that is formed at the hypotenuse of a first triangular plate that is jointly connected at one of the catheti, with said grip bracket.

6. The device according to claims 1 or 2 and 5, **characterized in that** said slot is arranged so that said actuator is allowed to perform a rotation that moves it from an initial position that is adjacent to said grip bracket to a position that is rotated through 90° and vice versa.

7. The device according to claims 1 or 2 and 6, **characterized in that** the rotation of said actuator is allowed by a second piston, whose body is jointly connected to, and arranged approximately parallel to, said grip bracket by way of an appropriately provided arm, the shank of said second piston being associated with plate that protrudes radially with respect to said body of said actuator.

8. The device according to claims 1 or 2 and 7**, characterized in that** said actuator further has an additional shank, which is articulated at its end to a centering and engagement element for said appendage, such as for example a complementarily shaped second plate that is conveniently magnetized in order to allow its entrainment during the lowering of said bottom.

9. The device according to claims 1 or 2 and 8, **characterized in that** means for loosening and dosing tobacco are rotatably associated with said tilting support, on the opposite side with respect to said grip bracket and so as to face said upper opening of said container, said means being constituted preferably by a box-like body that contains a set of rotating reels and has, at one side, a hopper for discharging the product onto an underlying conveyor.

10. The device according to claims 1 or 2 and 9, **characterized in that** said set of rotating reels is pivoted to said tilting device about an axis that is arranged, when said tilting assembly is in the inactive position, above the axis of rotation of the latter.

11. The device according to claims 1 or 2 and 4, **characterized in that** said actuator is of the linear type, be it electrical or pneumatic or hydraulic, and is adapted to engage said grip bracket, so as to give rise to the sliding of the bottom within the container, the sliding speed of said bottom being accurately controlled by way of known systems for adjusting the speed of said actuator so as to produce the extraction of the block of said product from said container at a speed that is conveniently controlled so as to obtain an equally controlled mass outflow of said product.

12. The container particularly for storing tobacco, **characterized in that** it has a box-like shape so as to form side walls, an upper feeding port or opening and a lower opening, protrusions being provided adjacent to said lower opening at the ends of said side walls and being directed toward the inside of said container, a movable bottom being slidingly associated within said container and being provided in a lower region with at least one appendage, which is conveniently shaped for complementarily shaped grip means that are associated with an appropriately provided actuator.
